# EUROPEAN PATENT SPECIFICATION

(11) **EP 3 186 402 B1**
(45) Date of publication and mention of the grant of the patent: **03.01.2018**
(21) Application number: 15763947.7
(22) Date of filing: 18.09.2015
(51) Int. Cl.: C21D 9/04, C21D 8/02, C21D 1/18

(54) **METHOD AND DEVICE FOR PRODUCTION OF HEAT TREATED WELDED RAIL FOR RAIL TRANSPORT AND RAIL PRODUCED THEREWITH**
VERFAHREN UND VORRICHTUNG ZUR HERSTELLUNG VON WÄRMEBEHANDELTEN GESCHWEISSTEN SCHIENEN FÜR DEN SCHIENENVERKEHR UND DAMIT HERGESTELLTE SCHIENEN
PROCÉDÉ ET DISPOSITIF POUR LA PRODUCTION DE RAIL SOUDÉ TRAITÉ THERMIQUEMENT POUR UN TRANSPORT FERROVIAIRE ET RAIL PRODUIT PAR CE BIAIS

(30) Priority: 23.09.2014 EP 14186034; 11.02.2015 EP 15154760
(43) Date of publication of application: 05.07.2017
(73) Proprietor: British Steel Limited, Scunthorpe, North Lincolnshire DN16 1BP (GB)
(72) Inventor: PYKE, Daniel Jonathan, NL-1970 CA IJmuiden (NL); SMITH, Howard Martin, NL-1970 CA IJmuiden (NL)
(74) Representative: Appleyard Lees IP LLP
(86) International application number: PCT/EP2015/071496
(87) International publication number: WO 2016/046092

(56) References cited:
- CN-A- 103 898 310
- US-A1- 2013 133 784
- US-A1- 2014 087 320

## Description

### Field of the invention

The present invention relates to a method and device for the production of heat treated welded rail for rail transport, such as railways and tramways.

The invention also relates to a rail produced with the method and/or the device.

### Technological background and prior art

Traditionally, short lengths of rails were produced and used to build railways. These short lengths of (e.g.) 12 m were connected by means of fishplates leaving some space in between to absorb thermal expansion and contraction.

Nowadays, the lengths of rail are usually welded together on the track laying site to form continuous welded rail (CWR). In this form of track, the rails are usually welded together by (e.g.) flash butt welding (FBW) or Alumino-Thermic Welding (ATW) to form one continuous rail that may be several kilometres long, or to repair or splice together existing CWR segments. This form of track gives a smooth ride and needs less maintenance. Train speeds, axle loads and total tonnages carried have increased accordingly. Welded rails are more expensive to lay than jointed tracks, but have much lower maintenance costs.

FBW is currently the preferred process for joining together the as-manufactured rails and involves electrical resistance heating of the two rail ends, after which the two rail ends are butted together. This is generally carried out off-site, either at the rail-manufacturing plant or in a 'stand-alone' depot. The resulting welded 'strings' are FBW'ed or ATW'ed welded into track. ATW is essentially a manual process requiring a reaction crucible and a weld portion consisting of aluminium and iron oxide powders which together with suitable alloying additions and an exothermic reaction ultimately form a cast welded joint. There is no theoretical limit to how long a welded rail can be.

If not restrained, rails would lengthen in hot weather and shrink in cold weather. To provide this restraint, the rail is prevented from moving in relation to the sleeper by use of clips or anchors. Anchors are more common for wooden sleepers, whereas most concrete or steel sleepers are fastened to the rail by special clips which resist movement of the rail.

To produce CWR it is advantageous to use long lengths of rail to reduce the number of welds that have to be made. Welds are generally regarded as weak points in the finished long welded rail. To produce rails with the required mechanical properties like hardness, strength and fatigue properties, rails are increasingly being subjected to a heat treatment prior to being delivered to the customers. However, when welding these heat-treated rails together, as with any welding operation, the influence of the heat from welding results in a heat affected zone within which the properties of the original heat treated rail are changed. Depending on the precise welding conditions and steel composition, the hardness of the critical HAZ around the weld (i.e. that portion which fully re-austenitises during the pre-heating stage) is often higher than the parent rail as a result of the faster cooling rate experienced following welding than by the as-rolled rail. In the case of heat treated rail, the welding operation generally results in a lower hardness and loss of tensile strength in the critical HAZ as the weld cools more slowly than the original rail did during the rail heat treatment operation. In both cases, however, those parts of the rail adjacent to the critical HAZ have seen elevated temperatures below those required to re-austenitise the steel. These areas instead undergo spheroidisation of the pearlite resulting in significantly lower hardness than both the parent rail and the hard critical HAZs. Importantly, the resulting non-uniform hardness profile across a weld can lead to localised preferential wear in the soft zones and ultimately 'cupping' of the welds. Welds also produce variations in residual stresses or stress patterns along the length of the rail. For rails having a bainitic microstructure the welding process may result in a local destruction of the bainitic microstructure.

Another problem with the method as described hereinabove is that the length of the rail has to be as long as possible to reduce the welding costs and number of welds, but that transportation of these long lengths causes logistical problems when supplying to locations which do not have access to an infrastructure capable of handling long lengths, or to where it is not possible or economical to transport long lengths of rail.

CN1648263 discloses a method and device to produce long rails by welding together shorter lengths of steel and heat treating each individual weld in situ at the installation site by using oxy-acetylene burners to raise the weld to a temperature of about 900°C and thereafter cooling it using water or mist to a temperature below about 400°C. However, applying such a procedure at the installation site is fraught with potential practical problems, with the added disadvantage of inconsistent residual stresses and/or variations in microstructure remaining along the length of the rail. US2013/133784 discloses a method wherein only the microstructure in and around an affected zone of a rail weld is improved. The rail weld is heated and cooled so as to form a resulting pearlitic structure within the rail weld so as to restore the microstructure of the weld to the microstructure of the non-heat affected part of the welded rail by means of a localised heat treatment at the location of the weld.

### Aims of the invention

The present invention aims to provide a method for producing rail of 'infinite' length with homogeneous properties along the entire length.

The invention also aims to obtain a rail of 'infinite' length with homogeneous properties along the entire length.

The present invention aims to provide a method for producing a heat treated rail of 'infinite' length with homogeneous properties along the entire length, and the rail produced therewith.

The invention also aims at providing a low-cost method for producing rail of 'infinite' length with homogeneous properties along the entire length from short lengths of rail. Within the context of this invention the term "rail" is not meant to mean railway parts such as switches, crossings and the like.

'Infinite' is intended to mean that as many lengths of rails can be welded together into a CWR as needed and that there is no theoretical limit to the number of lengths, only a practical limit.

### Summary of the invention

A first aspect of the present invention is related to a method for the production of heat treated welded rail for rail transport comprising the subsequent steps of:
i. providing rail lengths to the desired specifications (e.g. length, profile, properties, composition, etc);
ii. welding two rail lengths together in a welding unit to produce a continuous welded rail (CWR), or producing a longer CWR by welding one or more additional rail lengths to the CWR;
iii. optionally removing the weld upset or upsets, or parts thereof, for example by stripping, grinding, milling or any combination thereof,
iv. post-welding heat treating the entire CWR in a heat treatment unit by heating the entire CWR, or by heating all successive cross-sections of the CWR, to above the Ac₃-temperature to achieve a fully austenitic microstructure in the CWR or in the successive cross-sections of the CWR, followed by holding the CWR or the successive cross-sections of the CWR at a holding temperature above Ac₃ for a prescribed time tₐ followed by subjecting the CWR or the successive cross-sections of the CWR to cooling at a cooling rate using a cooling medium to a cooling stop temperature Tₛₜₒₚ to achieve the desired transformed final microstructure in the CWR or in the successive cross-sections of the CWR thereby achieving the desired transformed final microstructure and properties along the entire length of the post-welding heat treated CWR;
v. optionally providing the head of the post-welding heat treated CWR at the locations of a weld with the desired rail head profile, e.g. by grinding or milling.

By achieving the desired transformed final microstructure and properties along the entire length of the heat treated CWR it is meant that there are as little differences as possible over the length of the heat treated CWR. The disturbing influence of the welding together of two rail lengths is "ironed" out by the post-welding heat treatment, whereas the conventional pre-welding heat treatment still burdens the CWR with the variations in microstructure and properties as a result of the presence of the heat-affected zones caused by the welding process.

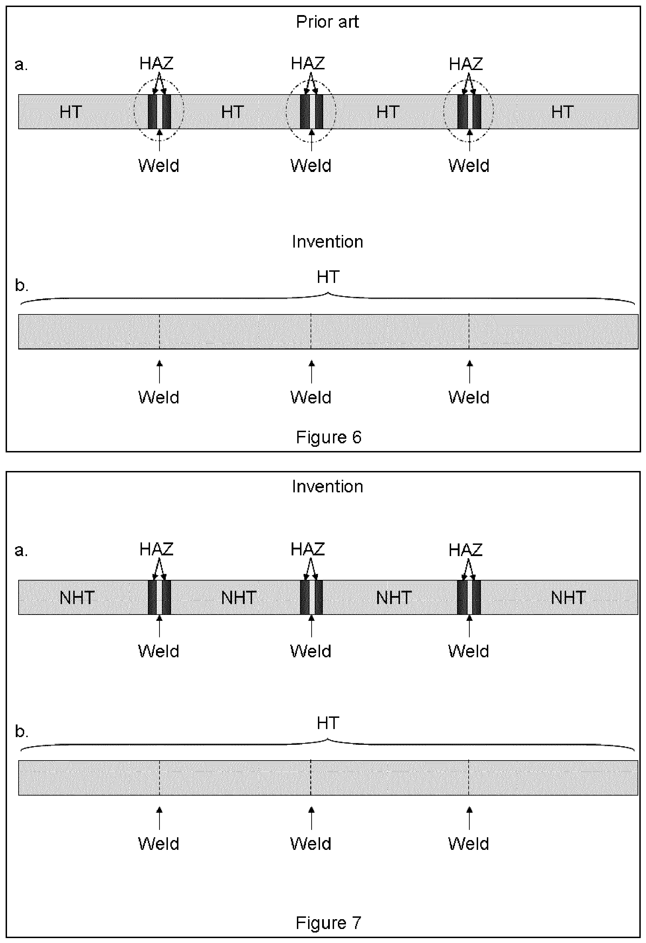

The major difference between the method according to the invention and the state of the art is that it is a post-welding heat treatment, and not a pre-welding heat treatment as in the state of the art. Another major difference between the method according to the invention and the state of the art is that **every** cross section of the welded rail is subjected to the post-welding heat treatment, and not just the weld and the parts in the vicinity of the weld which were affected by the weld. In effect, the entire rail, the welded sections and the portions between the welds, is heat treated. The resulting structure of the post-weld heat treated rail is consequently homogeneous throughout, the only exception being the fusion lines. There is no discernable HAZ as a result of the weld after the welded rail has been subjected to the post-welding heat treatment. This is the big difference between the method according to the invention and the method disclosed in US2013/133784 where only microstructure in and around an affected zone of a rail weld is improved. In the method according to the prior art the rail weld is heated and cooled so as to form a resulting pearlitic structure within the rail weld so as to make the microstructure of the weld identical to the microstructure of the non-heat affected part of the welded rail. So US2013/133784 aims to restore a degree of homogeneity after welding whereas the method according to the invention produces the homogeneous final microstructure during the post-weld heat treatment along the entirety of the welded rail. In figure 6 this is represented schematically. This local heat treatment is likely to result in local variations in internal stresses because the area next to the restored area (for example in US2013/133784: the web below the head, or the rail head next heating and cooling device 130) will be affected by the heat input of the local heat treatment, which may also affect the microstructure (and thus the properties) in these new heat affected zones. The advantage of the method according to the invention over the method of the prior art is that a post-weld heat treatment subjects every cross section of the rail to the same heat treatment, thereby inherently producing a homogeneous microstructure but also low and homogeneous residual stresses. The method according to the prior art requires that the rail is heat treated before the welding, then welded together, creating a different microstructure and stress pattern at the location of the weld, and then heat treating only the weld and its surroundings to reproduce the original microstructure. It is evident that the method according to the invention, normally (but not necessarily!) starting with non-heat treated (NHT) rail which is welded together and subsequently heat treated after welding (i.e. post-welding) is inevitably more homogeneous than a pre-welding heat-treated (HT), welded and subsequently locally heat treated rail. As stated, if so desired, the method according to the invention can also be used to post-weld heat treat welded rails which were already heat treated before the welding but, certainly from an economic perspective, this is not the preferable modus operandi. It is preferable that the rails to be welded together are NHT, receiving their heat treatment and thus their final properties, in the post-welding heat treatment according to the invention. Although the entire CWR (batch mode) or every cross section of the CWR (continuous mode) is subjected to the post-weld heat treatment, this means that a point in the rail, e.g. 10 mm below the centre line running surface has the same microstructure all along the final heat treated CWR, because it has received the same post-weld heat treatment all along the CWR. In the method according to US2013/133784 only the welds and their HAZ's are post-weld heat treated, which is a local heat treatment. Another problem associated with the prior art that the method according to the invention solves is that there is no longer a need to very carefully control the cooling conditions after welding, because the properties will be 'made' by the post-welding heat treatment.

In an embodiment tₐ is at least 1 minute and/or at most 10 minutes. Preferably tₐ is at most 5 minutes. Ac₃ depends largely on the chemistry of the rail and the heating conditions, and can be easily determined by e.g. dilatometry. Preferably the holding temperature does not exceed 1000 °C. Preferably, the combination of holding temperature and holding time is chosen such that the CWR or the subsequent cross-sections of the CWR attain a fully austenitic microstructure with a small grain size, and therefore the holding temperature should be as low as possible (but above Ac3) and the holding time as short as possible. After the austenitisation the cooling rate, cooling stop temperature and cooling medium is chosen so as to obtain a homogeneous microstructure with low internal stress. Preferably the cooling from the austenite region is performed by accelerated cooling, e.g. at a rate of 1 to 50 °C/s, preferably at most 20 °C/s, more preferably at most 10 °C/s. Upon reaching the desired cooling stop temperature the remainder of the cooling to ambient temperature is preferably performed by still air (=unaccelerated) cooling.

CN1648263 discloses a method and device to produce long rails by welding together shorter lengths of steel and heat treating the individual welds in situ at the installation site by using oxy-acetylene burners to raise the weld to a temperature of about 900°C. The most important disadvantage is that only the individual welds are subjected to the prescribed heat treatment, rather than the entire rail including the welds as per our invention. The relatively localised reheating at the location of each weld of CN1648263 leads to another HAZ at the interface between that portion of the rail or weld that has been heat treated and the adjacent un-heat treated part. Furthermore, even when using the method from CN1648263, the number of welds needs to be minimized, because each weld and each heat treatment of such a weld adds to the overall cost and time taken to produce the final long length of welded rail.

The advantage of a rail produced by the method according to the invention is that the entire CWR (i.e. multiple lengths of rail welded together) has undergone the heat treatment in-situ, preferably close to where the rail is to be installed. The mechanical properties of weld and rail can therefore be produced near the installation site after the welding has taken place and importantly there are no HAZs introduced by localised heat treatment of individual welds as the entire welded rail length containing multiple welds is subjected to a single continuous heat treatment involving reheating and subsequent cooling. This has significant beneficial effects. Most importantly, the mechanical properties of the weld and the body of the rail are practically identical (the only possible exception being the very narrow fusion line itself). All previous traces of the individual welds are eradicated by the post-weld heat treatment. Furthermore, the residual stresses in the CWR produced according to the invention will be the same at all locations along the length of the rail. By using the prescribed method, relatively short lengths (but still as long as possible to reduce the number of welds) of rail can be used, which enables/facilitates transport, e.g., free in the hold or in ISO standardized containers by sea and/or on lorries. Using short rail allows simplified logistics for rail transportation by road/rail or sea. In this way, the method according to the invention removes the need for major capital expenditure in locations without a local rail producer or without a local rail producer capable of supplying long length rails.

If the heat treatment facility is long enough to batch anneal a certain length of CWR, then the method according to the invention can be performed in batch mode. However, it is preferable to perform the heat treatment in a continuous heat treatment facility through which the CWR is fed at a certain feed rate so that the heat treatment occurs on a limited portion of the CWR at any given time. In a continuous heat treating facility each cross-section of the CWR successively undergoes the same thermal treatment as the rail is being fed through the heat treating facility at a chosen (preferably constant) feed rate. A heat treating facility as described in EP0765942-A1 would be suitable for this continuous heat treating process. Such a continuous heat treatment facility could e.g. be an induction heating unit or a set of induction heating units. In that case the continuous welded rail would be heat treated by feeding the rail through a (set of) heat treatment unit(s) and heat treat the rail by heating a cross-section of the rail to above the Ac3-temperature to achieve a fully austenitic microstructure in the rail section, followed by holding the rail section above Ac₃ for a prescribed time tₐ followed by subjecting parts of the rail to cooling at a cooling rate using a cooling medium to a prescribed cooling stop temperature Tₛₜₒₚ to achieve the desired homogeneous, transformed final microstructure at the selected parts of the rail along the entire length of the heat treated continuous welded rail. In the batch mode the entire rail undergoes the same heat treatment at the same time. So the length of the furnace is at least as long as the longest CWR treatable in this furnace. In continuous mode each cross-section of the rail undergoes the same heat treatment, but not at the same time. These continuous facilities can therefore be much shorter than the CWR, and are not limited to treating certain lengths of CWR.

Although it is preferable to perform the continuous heat treatment by heating the entire rail (batch mode) or the every cross-section (continuous mode) to above Ac3, it is also possible to e.g. only heat the head, or the head and the web, or the foot to above Ac3. However, this may result in variations in internal stresses over the cross-section, and this may be undesirable.

It is possible to weld together a plurality of rail lengths with a welding unit to create a CWR consisting of said plurality of rail lengths welded together (e.g. 10 rails of 12 m welded together to produce a 120 m long welded rail), thereby emulating the capability to produce long lengths on a site where no facilities are available to produce these long lengths by rolling, and then subsequently feed this long length rail, consisting of said plurality of rail lengths welded together, into a heat treating unit to heat treat every part of the rail including the welds, and not only the welds. This will result in a CWR of consistent quality, microstructure and properties. So although the method can be used to produce CWR of very long lengths, it is also possible to cut the CWR after a certain length has been obtained if the cut CWR has to be transported. The long lengths thus produced may be welded together on the track laying site by conventional means, such as FBW or ATW. By using the method according to the invention the length of the continuous welded and heat-treated rail is theoretically unlimited, and only limited by practical issues such as transportation of the rail to the installation location.

In a preferable embodiment of the invention the feed rate for the heat treating step is between at least 0.5 m·min⁻¹ and/or at most 10 m·min⁻¹. Preferably the feed rate is at least 1 m·min⁻¹ and/or at most 7 and more preferably at most 5 m·min⁻¹. Ideally, the feed rate is between 2 and 4 m·min⁻¹. Preferably the feed rate is a constant feed rate, because this is the best guarantee for a consistent quality of the heat treated rail.

The invention is embodied in a method wherein the weld upset/(s) is/(are) removed from the foot, preferably wherein the weld upset is removed from the foot, web and head of the CWR. Although the method according to the invention does not require removal of the weld upset, it is preferable to remove the so-called foot strip for heat treatment and performance purposes. The weld upset on the web and head of the CWR can be left, but it can also be removed to improve the aesthetic performance. Moreover it may act as an undesired "heating raiser". By removing the weld upset from the foot, or from the foot, web and head of the CWR, the quality of the CWR is improved, both aesthetically and mechanically because the smooth surface will not give to stress raisers, and the subsequent heat treatment is more homogeneous.

The CWR may be straightened and/or profiled after welding and before the post-welding heat treatment. It is also possible to straightened and/or profiled after the post-welding heat treatment.

In a preferable embodiment the heat treating step preferably utilises compressed air or air-mist cooling to cool down the heat treated CWR.

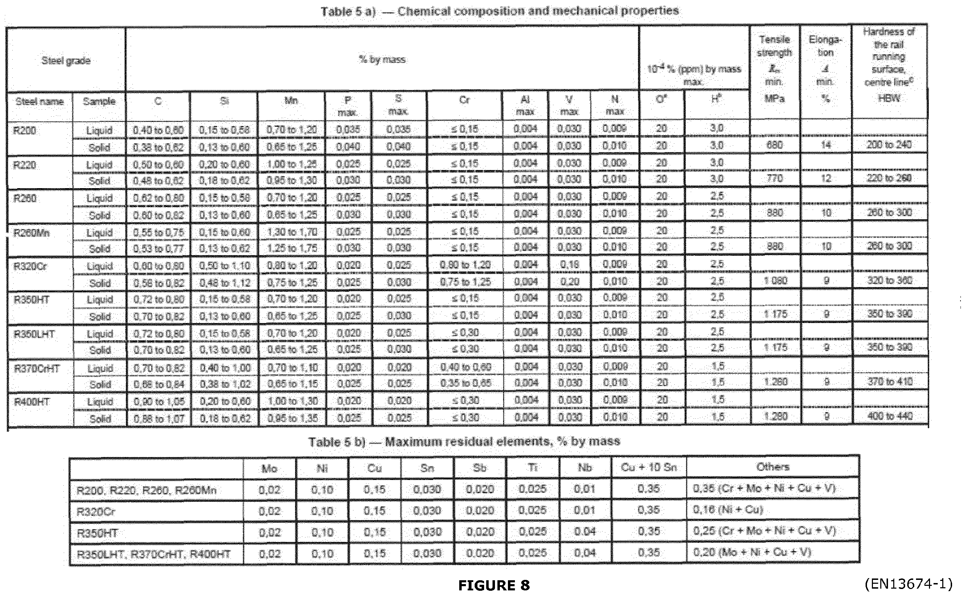

In a preferable embodiment of the invention the CWR is produced by welding together lengths of steel having a composition suitable for obtaining a pearlite microstructure after post-welding heat treatment, wherein the cooling stop temperature is below Ar₁, and wherein the transformed final microstructure of the heat treated CWR is fully pearlitic and free of martensite or bainite phases. Pearlitic rails are the most commonly used type in the rail industry including the hypereutectoid rail steels containing a vast majority of pearlite. When welding together these pearlitic (hypoeutectoid, eutectoid or hypereutectoid) steels, a large HAZ is produced, and the method according to the invention is particularly suited to produce a long rail from shorter rails without these large HAZs which is otherwise only possible by producing long lengths of rails as one single piece. The welding together of the rail followed by the heat treatment of the entire rail produces a rail which has the favourable properties of a heat treated rail and no HAZs that adversely affect the properties. Instead the rail has favourable heat treated properties over the entire length and no HAZs whatsoever. In order to obtain this it is important that the heat treatment is designed in such a way that the austenitic structure is cooled down at a rate which is high enough to produce a very fine pearlitic structure but which is not so high so as to run the risk of formation of bainite or martensite, and to a temperature sufficiently low to promote the pearlite formation. The cooling rate from the austenite range has to be high enough to prevent the ferrite nose (if at all present) in the CCT-diagram. This technology is readily available to the skilled person and thus commonly known. Subjecting samples of the composition, such as an R260, to tests like dilatometry will readily yield the required information about Ar1 and Ac3, and therefore about the annealing temperatures to achieve an austenitic microstructure in the rail and about the cooling rates required to obtain the desired final microstructure in the rail. The method is applicable to all hypo-, hyper- or eutectoid pearlitic rail grades. Figure 8 an 9 give chemical compositions of the grades for which the method according to the invention can be applied. The method is particularly suitable for the Heat Treatable grades (R350HT, R350LHT, R370CrHT, R400HT and HP355).

In a preferable embodiment of the invention the CWR is produced by welding together lengths of steel having a composition suitable for achieving a bainite microstructure after heat treatment, wherein the cooling stop temperature is below the bainite finish temperature (Bf), and wherein the transformed final microstructure of the heat treated CWR is fully bainitic and substantially or preferably completely free of martensite and substantially or preferably completely free of pearlite or ferrite phases. There are different families of bainitic rails. Some are high strength rails offering good wear resistance and used primarily for heavy haul track while others have been designed specifically to address rolling contact fatigue in mixed traffic lines. By welding together these steels the resulting properties within the weld and HAZs can change from those of the as-manufactured rails. The method according to the invention is particularly suited to prevent this without the need to produce long lengths of rails as one single piece. The welding together of the rail lengths followed by heat treatment of the entire rail produced a rail which has the favourable properties of a heat treated rail but no welds at whose locations the favourable heat treated properties are destroyed. Instead the rail has favourable heat treated properties over the entire length and no HAZs whatsoever. In order to obtain this it is important that the heat treatment is designed in such a way that the austenitic structure is cooled through a temperature against time curve that produces the desired microstructure. This technology is readily available to the skilled person and thus commonly known. Subjecting samples of the composition, such as an B320, to tests like dilatometry will readily yield the required information about Ar₁ and Ac₃, and therefore about the annealing temperatures to achieve an austenitic microstructure in the rail and about the cooling rates required to obtain the desired final microstructure in the rail. The method is applicable to all bainitic rail grades. For example, a bainitic steel whose composition by weight includes 0.05 to 0.50% carbon, 1.00 to 3.00% silicon, 0.50 to 2.50% manganese, 0 to 0.10% aluminium, 0.25 to 2.50% chromium, 0 to 3,00% nickel; 0 to 0.025 % sulphur; 0 to 0.025 % phosphorus, 0 to 1.00% molybdenum; 0 to 1.5% copper; 0 to 0.10% titanium, 0 to 0.50% vanadium; 0 to 0.005% boron, 0 to 0.01 % N, balance iron and inevitable impurities.

The welding is preferably of a type that generates a weld from only parent material, i.e. no filler material is used. These welding types encompass gas pressure welding, friction welding, electron beam welding. In a preferable embodiment the welding process is a flash-butt welding process.

In an embodiment of the invention the welding of the rail lengths to form a CWR or the welding of a rail length to a CWR is performed in a controlled atmosphere to avoid the decarburisation of the steels at the fusion line.

Straightening after or before welding the rail lengths together could be performed by pressing. It is preferable to profile the welded rail, e.g. by grinding, after the straightening.

A second aspect of the present invention is related to a device for performing the method according to the invention provided with:
i. a welding unit for welding two rail lengths together to produce a CWR, or to produce a longer CWR by welding additional rail lengths to the CWR;
ii. an optional unit for removing part of, or the whole weld upset or weld upsets, e.g. a stripping, grinding or milling or a combination thereof,
iii. a heat treating unit
   ∘ for post-welding heat treating the CWR by subjecting the entire CWR to substantially the same heat treatment above the Ac₃-temperature to achieve a fully austenitic microstructure in the CWR in a batch heat treating unit, or
   ∘ for post-welding heat treating the CWR by feeding the CWR through the heat treatment unit for heating all successive cross-sections of the CWR to above the Ac₃-temperature to achieve a fully austenitic microstructure in the successive cross-sections,
iv. a holding unit for holding the CWR or the successive cross-sections of the CWR above Ac₃ for a time tₐ, said holding unit being optionally integrated in the heat treating unit,
v. a cooling unit for cooling parts of the CWR or the successive cross-sections of the CWR (head, base of the foot, web) or the entire CWR or the successive cross-sections of the CWR using a cooling medium to a cooling stop temperature Tₛₜₒₚ to achieve the desired transformed final microstructure and properties in the post-welding heat treated CWR along the length of the CWR,
vi. optional head profiling means for providing the head of the CWR at the locations of the weld or welds with the desired rail head profile,
vii. optional straightening means for straightening the CWR and/or optional straightening means to straighten the welded and heat treated CWR.

In a preferable embodiment of the invention the heat treatment unit and its ancillary devices (such as welding and grinding unit) is designed and constructed in such a way that it is relatively easy to construct at a given site, and that it is also relatively easy to deconstruct and relocate to a different site where rail is to be heat treated.

In an embodiment of the invention the welding unit contains means to perform the welding in a controlled atmosphere to avoid the decarburisation of the rails at the fusion line.

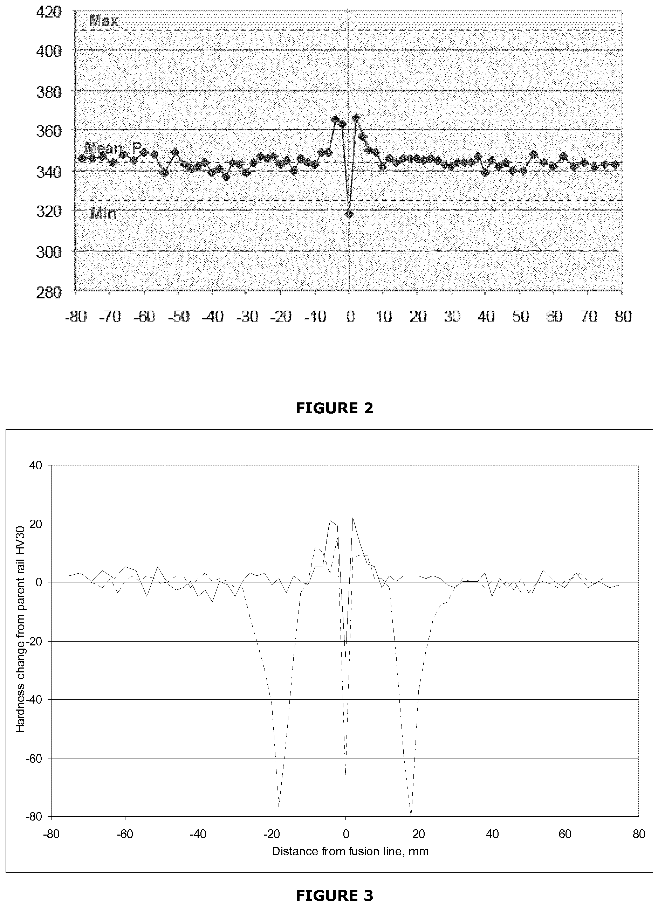

In a third aspect of the invention a post-welding heat treated CWR produced according to the method of the invention or produced using the device according to the invention is provided. In an embodiment the post-welding heat treated CWR comprises no heat affected zones at any position along the entire length of the heat treated continuous welded rail. It is preferable that the difference between the minimum hardness of the post-welding heat treated CWR and the average hardness of the post-welding heat treated CWR is lower than 10%, preferably 7.5%, more preferably 5% of the average hardness value of the post-welding heat treated CWR (HV30). Note: all hardness values are given in HV30 unless otherwise indicated and are determined in accordance with ISO 6507-1:2005. It is preferable that the difference between the maximum hardness of the post-welding heat treated CWR and the average hardness of the post-welding heat treated CWR is lower than 15%, preferably lower than 10%, more preferably 7.5%, even more preferably 5% of the average hardness value of the post-welding heat treated CWR (HV30). It is preferable that the difference between the minimum hardness of the post-welding heat treated CWR and the average hardness of the post-welding heat treated CWR is lower than 10%, preferably 7.5%, more preferably 5% of the average hardness value of the post-welding heat treated CWR (HV30) and the difference between the maximum hardness of the post-welding heat treated CWR and the average hardness of the post-welding heat treated CWR is lower than 15%, preferably lower than 10%, more preferably 7.5%, even more preferably 5% of the average hardness value of the post-welding heat treated CWR (HV30). Figure 2 shows an average hardness value in HV30 indicated by "Mean P" in the figure. Note that the value at the fusion line is ignored in this respect as per the relevant standard. In a pre-welding heat treated pearlitic rail the minimum hardness is usually caused by speroidisation of the pearlite in the HAZ.

The invention will now be further explained by means of a non-limitative example and figures. Five short lengths rails of not-yet heat treated R350HT (i.e. having a composition comparable to R260) were provided which were flash-butt welded together in air using a welding program suitable for flash-butt welding. Each flash-butt welding device is different and no standardised set of operating parameters is available, but it is well within the scope of the skilled person to come up with a suitable welding programme for any standardized composition and it is not an undue burden to come up with such a welding programme. Reference is made to WO 2005/001204-A1 by way of example for R220 grades. Four welds were thus produced. Of these, two were subjected to a standard grind of the head (1 & 2) as per the standard FBW preparation procedure (BS EN14587-1:2007) as well as the base of the foot for easier handling, and two were subjected to a standard grind of the head and the base and upper part of the foot (3 & 4). The CWR thus produced was processed through an induction heat treatment plant by austenitising each cross-section of the CWR and cooling it after each cross-section was held above Ac₃ and subsequently cooled by means of accelerated cooling to Tₛₜₒₚ. Cooling to ambient temperature was performed in still air. An example of a suitable heat treatment plant and details of the heat treatment of the samples is given in EP0765942-A1, the contents of which are herewith included herein by reference.

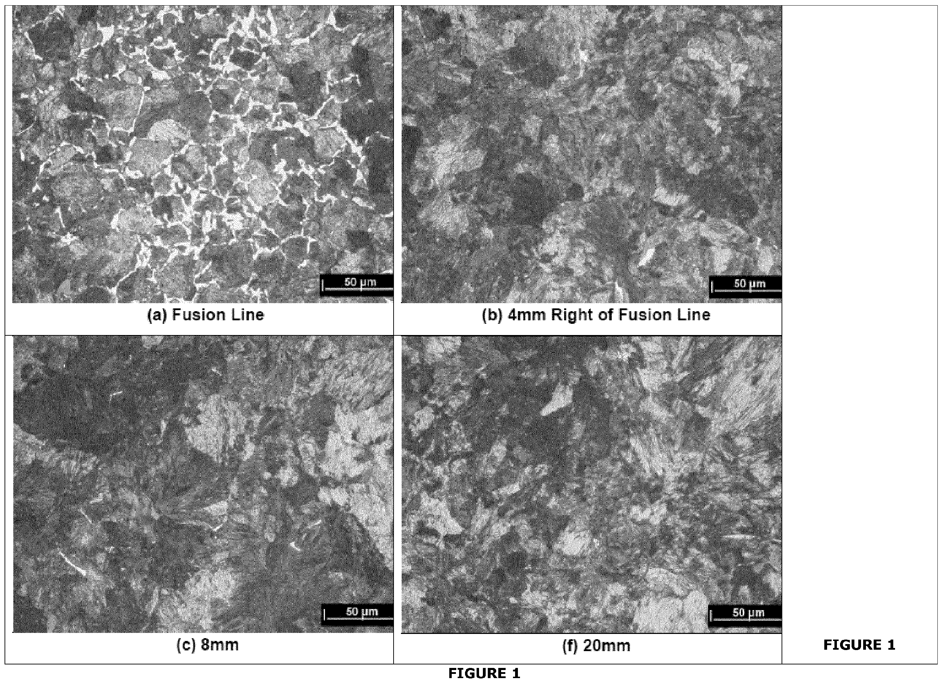

The material was subsequently examined metallurgically in accordance with BS EN14587-1:2007. This included the assessment of the Heat Affected Zone (HAZ) width, microstructure and rail hardness using the criteria specified for grade R350HT rail (composition below). It was concluded that heat treatment of the rail / weld combinations did not affect the results of the three-point bend test conducted on the flash butt welds. Microstructural evaluation of the heat treated weld revealed that the microstructure was extremely homogeneous and consistent with the measured hardness values. The microstructure is shown in figure 1a-d where the microstructure is shown for the fusion line (a), 4 mm from the fusion line (b), 8 mm from the fusion line (c) and 20 mm from the fusion line (d). The latter can be considered to be the heat treated parent material. Hardness values are presented in figure 2. With the exception of the fusion line, the material is completely pearlitic, and no evidence of martensite or bainite was observed. In figure 3 these hardness values are compared to the non heat treated welds (which are obviously lower and at the R260 level). The fusion line, where some ferrite is present, is so narrow that it does not affect the performance of the welded rail. But the main difference is the wide range in hardness values and the width of the HAZ of about 30 mm in comparison to the width of about 15 mm for the heat treated variant where, moreover, the increase in hardness is relatively marginal (15 HV30 on a level of 344 HV30 (<4.3%)) in comparison to the increase in hardness for the non heat-treated version (60 HV30 on a level of 260 HV30 >20%). Note that according to BS EN14587-1:2007 the hardness value at the fusion line is ignored when deciding whether or not the requirements for a certain grade are met. In figure 2 the minimum and maximum value for R350HT rail (325 and 410 HV30) are presented along with the average P of the parent rail. Hardness was measured using a calibrated hardness tester HTM4225 at the depth of 5 mm below the running surface and with an indent interval of 2 mm at 30 kg load.

Composition of R350 HT (balance iron and inevitable impurities).

| Cast | C | Si | Mn | P | s | Cr | Mo | Ni | Al | N | V |
|---|---|---|---|---|---|---|---|---|---|---|---|
| 62958 | 0.79 | 0.43 | 1.13 | 0.015 | 0.016 | 0.026 | 0.002 | 0.018 | 0.001 | 0.0054 | 0.006 |
| Composition of R350 HT cast (wt. %) | | | | | | | | | | | |

Similar results are obtainable with the steel in the table below (balance iron and inevitable impurities). C, D and E are hypereutectoid steels (HP355). F and G are bainitic steels.

| | C | Si | Mn | P | S | Cr | V | Al | N | B | Mo |
|---|---|---|---|---|---|---|---|---|---|---|---|
| C | 0.92 | 0.92 | 0.85 | 0.014 | 0.012 | 0.02 | 0.11 | 0.001 | 37 | imp | imp |
| D | 0.95 | 0.89 | 0.88 | 0.015 | 0.016 | 0.02 | 0.11 | 0.001 | 41 | imp | imp |
| E | 0.94 | 0.87 | 0.85 | 0.010 | 0.014 | 0.02 | 0.12 | 0.002 | 43 | imp | imp |
| F | 0.20 | 1.20 | 1.50 | 0.015 | 0.015 | 0.50 | 0.18 | 0.003 | 60 | 30 | 0.16 |
| G | 0.33 | 1.20 | 1.50 | 0.015 | 0.018 | 0.55 | 0.01 | 0.003 | 60 | 30 | 0.16 |

### Brief description of the drawings

Figure la-d shows the microstructure of the heat treated welded rail of the example above at the fusion line (a) and 4 (b), 8 (c) and 20 (d) mm from the fusion line.
Figure 2 is the hardness profile of the microstructure of figure 1. It is clearly visible that the hardness profile is very flat, with only a lower value at the fusion line and a couple of higher values next to the fusion line.
Figure 3 is the hardness profile of a post-welding heat treated rail (solid line) compared to a pre-welding heat treated rail (dashed line) as a function of the distance to the weld (0 being the fusion line). Comparison of these profiles shows a very big difference in the hardness profile near the weld leading to the conclusion that the post-welding heat treated rail has a much more even hardness distribution along the length of the rail.

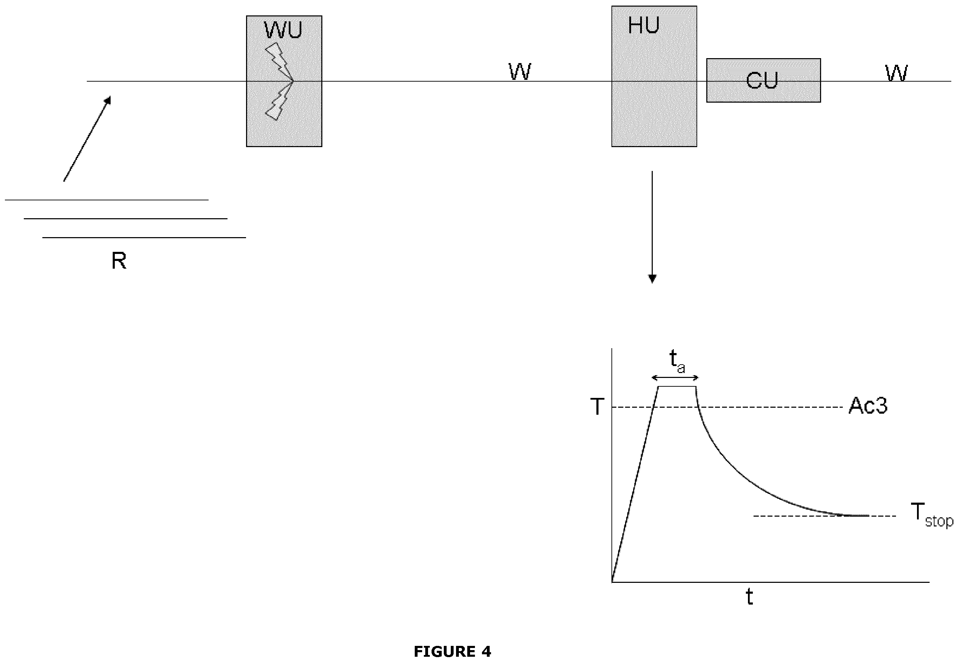

Figure 4 is a schematic and non-limiting drawing of a device according to the invention wherein R represents an amount of rail lengths which are welded together in a welding unit (WU) to form a CWR and subsequently heat treated in a heating unit (HU) and cooled in a cooling unit (CU). The WU is drawn to be in-line with the HU in this figure, but most likely the WU and the HU are decoupled processes for practical reasons. A schematic temperature profile is given as well. The location of the welds is indicated schematically with a 'W'.

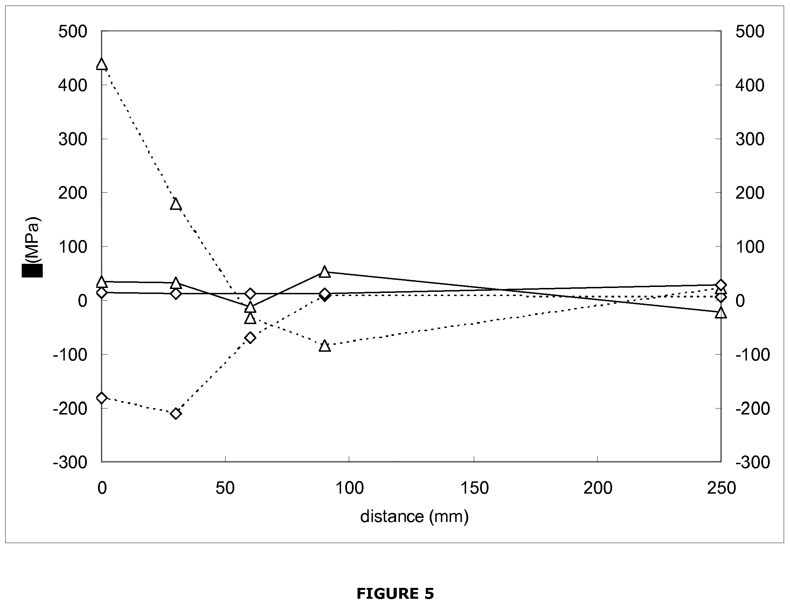

Figure 5 is a plot of residual stress values along the length of the welded rail from the weld to 250 mm from the weld, showing the longitudinal residual stress on the surface of the foot at the centre-line of the rail and the vertical residual stress on the surface of the web of the rail at the rail mid-web position. It is evident from this Figure that the residual stress in the rail produced according to the invention is much lower and more even than the one in the process where the weld is not heat treated, which is the state-of-the-art process as described in [0007]. In the Figure the solid lines represent the post-welding heat treated rail and the dashed lines represents the pre-welding heat treated rail. The triangles show the vertical residual stress (in MPa) of the web, and the diamonds show the longitudinal residual stress (in MPa) of the foot of the rail, all as a function of the distance (in mm) from the weld.
Figure 6 shows the difference between the method according to the prior art (a) and the method according to the invention (b). In Figure 6a the heat treated (HT) rails are welded together, forming a heat affected zone at the location of each weld. The method according to the prior art then heat treats the weld (indicated with the dashed ellipsoid) in order to restore the properties and microstructure back to the level of the original heat treated rails. However, this local heat treatment is likely to result in local variations in internal stresses and creates new zones next to the area of local heat treatment where the local heat treatment influences the microstructure of the pre-weld heat treated (HT) rail. In the method according to the invention the non-heat treated (NHT) rails are welded together (see also Figure 7), also forming a heat affected zone at the location of each weld. But after this the entire rail is heat treated, either in one go (batch mode), or each cross-section after cross-section (continuous mode). Since the composition of the weld is substantially identical to the composition of the rail, this post-weld heat treatment leads to a homogeneous microstructure along the rail, with the possible exception of the fusion line. When studying the microstructure only the fusion line is discernable (see also figure 1). This is indicated in Figure 6b with the dashed line. Beside the fusion line there is no discernable difference between the post-weld heat treated HAZ and the heat treated rail in the method according to the invention.

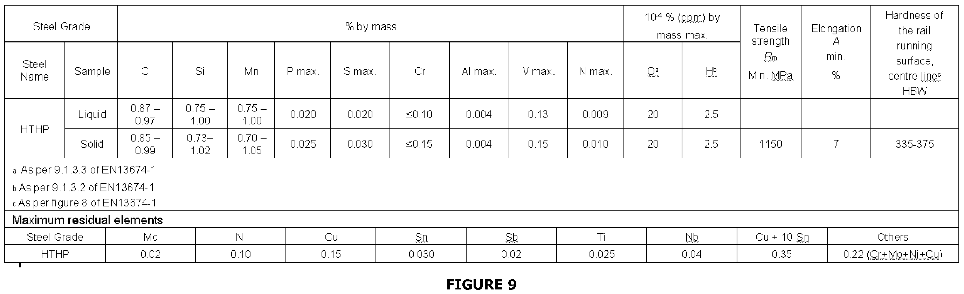

Figure 7 shows the method according to the invention after the welding (a) and after the post-weld heat treatment (b) with the "invisible" welds. Figure 8 and 9 show compositions of steels that can be processed with the method according to the invention.

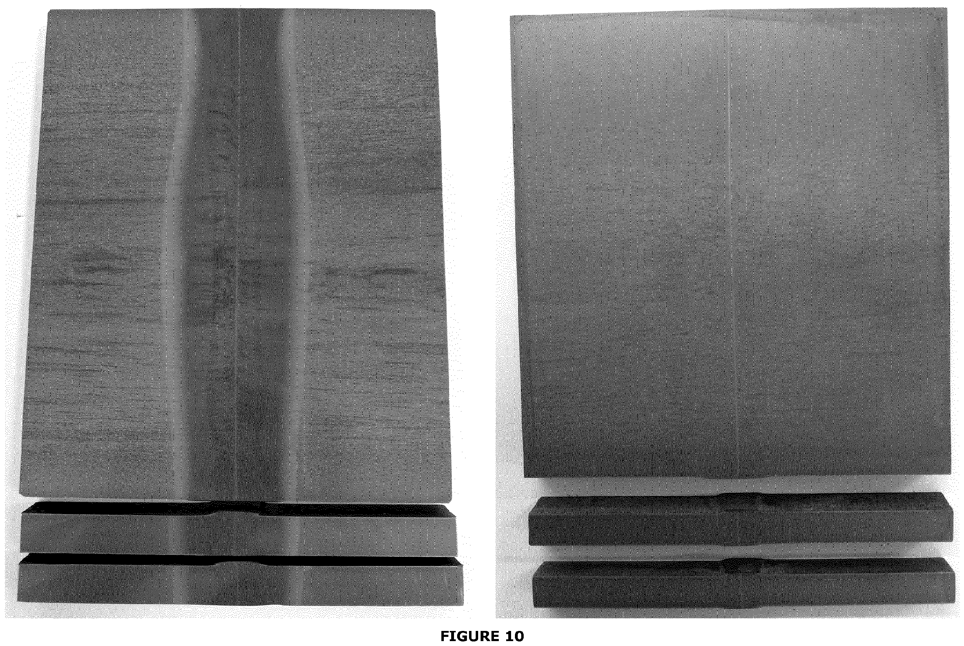

Figure 10 shows a macro-photograph of a Heat Affected Zone (left) after welding two rails together and after annealing according to the invention (right). The upper part of the images shows the effect in the thick parts of the rail (head) and the lower parts show the effect in the thin parts of the rail (foot). The right hand image shows the microstructure after annealing according to the invention, where only the fusion line is still visible, but the rest of the HAZ has gone completely.

## Claims

1. A method for the production of heat treated welded rail for rail transport comprising the subsequent steps of:
i. providing rail lengths to the desired specifications;
ii. welding two rail lengths together in a welding unit to produce a continuous welded rail, CWR, or producing a longer continuous welded rail by welding one or more additional rail lengths to the continuous welded rail;
iii. optionally removing a weld upset or upsets, or parts thereof;
**characterised by**:
iv. post-welding heat treating the entire continuous welded rail in a heat treatment unit by heating the entire continuous welded rail, or by heating all successive cross-sections of the continuous welded rail, to above the Ac₃-temperature to achieve a fully austenitic microstructure in the entire continuous welded rail, followed by holding the continuous welded rail or all successive cross-sections of the continuous welded rail section above Ac₃ for a prescribed time tₐ followed by subjecting the continuous welded rail or all successive cross-sections of the continuous welded rail to cooling at a cooling rate using a cooling medium to a prescribed cooling stop temperature Tₛₜₒₚ to achieve the desired transformed final microstructure and properties along the entire length of the post-welding heat treated continuous welded rail;
v. optionally providing the head of the post-welding heat treated continuous welded rail at the locations of a weld with a desired rail head profile.

2. The method according to claim 1 wherein the continuous welded rail is heat treated at a constant feed rate of at least 0.5 and/or at most 10 m·min⁻¹.

3. The method according to any one of the preceding claims, wherein the weld upset is removed from the foot, preferably wherein the weld upset is removed from the foot, web and head of the rail.

4. The method according to any one of the preceding claims, wherein the continuous welded rail is produced by welding together lengths of steel having a composition suitable for obtaining a microstructure which is substantially eutectoid or hypereutectoid after heat treatment, wherein the cooling stop temperature is below Ar₁, and wherein the transformed final microstructure treated of the post-welding heat treated continuous welded rail consists substantially of pearlite or pearlite and cementite and substantially free or completely free of martensite and/or bainite phases.

5. The method according to any one of the preceding claims, wherein the continuous welded rail is made by welding together lengths of steel having a composition suitable for producing a bainitic microstructure after heat treatment, wherein the cooling stop temperature is such that the transformed final microstructure of the post-welding heat treated continuous welded rail is fully bainitic and substantially or entirely free of martensite and substantially or entirely free of pearlite or ferrite phases.

6. The method according to any one of the preceding claims, wherein the welding process is a flash-butt welding process.

7. A device for performing the method of any one of claims 1 to 6 provided with:
i. a welding unit (WU) for welding two rail lengths together in the welding unit (WU) to produce a continuous welded rail, CWR, or to produce a longer continuous welded rail by welding additional rail lengths to the continuous welded rail;
ii. an optional unit for removing part of, or a whole weld upset or weld upsets;
**characterised by**:
iii. a heat treating unit (HU)
a. for post-welding heat treating the continuous welded rail by subjecting the entire continuous welded rail to substantially the same heat treatment above the Ac₃-temperature to achieve a fully austenitic microstructure in the continuous welded rail in a batch heat treatment unit, or
b. for post-welding heat treating the entire continuous welded rail by feeding the entire continuous welded rail through the heat treatment unit (HU) for heating all successive cross-sections of the continuous welded rail to above the Ac₃-temperature to achieve a fully austenitic microstructure in all the successive cross-sections;
iv. a holding unit for holding the continuous welded rail or all the successive cross- sections above Ac₃ for a time tₐ, said holding unit being optionally integrated in the heat treating unit;
v. a cooling unit (CU) for cooling parts of the continuous welded rail or the entire continuous welded rail or all the successive cross-sections of the CWR using a cooling medium to a cooling stop temperature Tₛₜₒₚ to achieve the desired homogeneous transformed final microstructure and properties in the entire post-welding heat treated continuous welded rail,
vi. optional head profiling means for providing the head of the continuous welded rail at the locations of the weld or welds with the desired rail head profile;
vii. optional straightening means to straighten the continuous welded rail and/or optional straightening means to straighten the heat treated continuous welded rail.

8. A post-welding heat treated rail produced according to the method of claim 1 to 6 or produced using the device of claim 7.

9. A rail according to claim 8 **characterised in that** no heat affected zones are present at any position along the entire length of the post-welding heat treated rail.

10. A rail according to claim 8 or 9 wherein:
- the difference between the minimum hardness in HV30 of the post-welding heat treated CWR and the average hardness in HV30 of the post-welding heat treated CWR is lower than 10% of the average hardness value in HV30, or wherein
- the difference between the maximum hardness in HV30 of the post-welding heat treated CWR and the average hardness in HV30 of the post-welding heat treated CWR is lower than 15% of the average hardness value in HV30, or wherein
- that the difference between the minimum hardness of the post-welding heat treated CWR and the average hardness in HV30 of the post-welding heat treated CWR is lower than 10% of the average hardness value in HV30 and the difference between the maximum hardness in HV30 of the post-welding heat treated CWR and the average hardness in HV30 of the post-welding heat treated CWR is lower than 15% of the average hardness value in HV30; and
wherein the hardnesses in HV30 are determined in accordance with ISO 6507-1:2005.

## Patentansprüche

1. Verfahren für die Produktion von wärmebehandelten geschweißten Schienen für den Schienenverkehr, das folgende aufeinanderfolgenden Schritte umfasst:
i. Bereitstellen von Schienenabschnitten gemäß den gewünschten Spezifikationen;
ii. Verschweißen zweier Schienenabschnitte miteinander in einer Schweißeinheit, um eine kontinuierliche geschweißte Schiene (KGS) herzustellen, oder Herstellen einer längeren kontinuierlichen geschweißten Schiene durch Schweißen eines oder mehrerer zusätzlicher Schienenabschnitte an die kontinuierliche geschweißte Schiene;
iii. optionales Entfernen einer oder mehrerer Schweißnahtüberhöhungen oder von Teilen davon;
**gekennzeichnet durch**:
iv. eine auf das Schweißen folgende Wärmebehandlung der gesamten kontinuierlichen geschweißten Schiene in einer Wärmebehandlungseinheit durch Erwärmen der gesamten kontinuierlichen geschweißten Schiene oder durch Erwärmen aller aufeinanderfolgenden Querschnitte der kontinuierlichen geschweißten Schiene bis auf oberhalb der Ac₃-Temperatur, um eine vollständig austenitische Mikrostruktur in der gesamten kontinuierlichen geschweißten Schiene zu erreichen, gefolgt von einem Halten der kontinuierlichen geschweißten Schiene oder aller aufeinanderfolgenden Querschnitte der kontinuierlichen geschweißten Schienensektion auf oberhalb von Ac₃ über eine zuvor festgelegte Zeit tₐ, gefolgt von einem Abkühlen der kontinuierlichen geschweißten Schiene oder aller aufeinanderfolgenden Querschnitte der kontinuierlichen geschweißten Schiene mit einer Abkühlrate unter Verwendung eines Kühlmediums auf eine vorgeschriebene Kühlstopptemperatur Tₛₜₒₚₚ, um die gewünschte transformierte endgültige Mikrostruktur und die gewünschten Eigenschaften entlang der gesamten Länge der nach dem Schweißen wärmebehandelten kontinuierlichen geschweißten Schiene zu erreichen;
v. optionales Versehen des Kopfes der nach dem Schweißen wärmebehandelten kontinuierlichen geschweißten Schiene an den Positionen einer Schweißnaht mit einem gewünschten Schienenkopfprofil.

2. Verfahren nach Anspruch 1, wobei die kontinuierliche geschweißte Schiene bei einer konstanten Zufuhrrate von mindestens 0,5 und/oder maximal 10 m·min⁻¹ wärmebehandelt wird.

3. Verfahren nach einem der vorangehenden Ansprüche, wobei die Schweißnahtüberhöhung von dem Fuß entfernt wird, und wobei bevorzugt die Schweißnahtüberhöhung von dem Fuß, dem Steg und dem Kopf der Schienen entfernt wird.

4. Verfahren nach einem der vorangehenden Ansprüche, wobei die kontinuierliche geschweißte Schiene durch Verschweißen von Abschnitten aus Stahl hergestellt wird, dessen Zusammensetzung für das Erhalten einer Mikrostruktur geeignet ist, die nach der Wärmebehandlung im Wesentlichen eutektoid oder hypereutektoid ist, wobei die Kühlstopptemperatur unter Ar₁ liegt, und wobei die behandelte transformierte endgültige Mikrostruktur der nach dem Schweißen wärmebehandelten kontinuierlichen geschweißten Schiene im Wesentlichen aus Perlit oder Perlit und Zementit besteht und im Wesentlichen frei oder vollständig frei von Martensit- und/oder Bainitphasen ist.

5. Verfahren nach einem der vorangehenden Ansprüche, wobei die kontinuierliche geschweißte Schiene durch Verschweißen von Abschnitten aus Stahl hergestellt wird, dessen Zusammensetzung zum Herstellen einer bainitischen Mikrostruktur nach der Wärmebehandlung geeignet ist, wobei die Kühlstopptemperatur derart ist, dass die transformierte endgültige Mikrostruktur der nach dem Schweißen wärmebehandelten kontinuierlichen geschweißten Schiene vollständig bainitisch ist und im Wesentlichen oder vollständig frei von Martensit- und im Wesentlichen oder vollständig frei von Perlit- oder Ferritphasen ist.

6. Verfahren nach einem der vorangehenden Ansprüche, wobei der Schweißprozess ein Abbrennstumpfschweißprozess ist.

7. Vorrichtung zum Ausführen des Verfahrens nach einem der Ansprüche 1 bis 6, die mit Folgendem ausgestattet ist:
i. einer Schweißeinheit (SE) zum Verschweißen zweier Schienenabschnitte miteinander in der Schweißeinheit (SE), um eine kontinuierliche geschweißte Schiene (KGS) herzustellen oder um eine längere kontinuierliche geschweißte Schiene durch Schweißen zusätzlicher Schienenabschnitte an die kontinuierliche geschweißte Schiene herzustellen;
ii. eine optionale Einheit zum teilweisen oder vollständigen Entfernen einer oder mehrerer Schweißnahtüberhöhungen;
**gekennzeichnet durch**:
iii. einer Wärmebehandlungseinheit (HU)
a. für eine auf das Schweißen folgende Wärmebehandlung der kontinuierlichen geschweißten Schiene durch Unterziehen der gesamten kontinuierlichen geschweißten Schiene einer im Wesentlichen gleichen Wärmebehandlung oberhalb der Ac₃-Temperatur, um eine vollständig austenitische Mikrostruktur in der kontinuierlichen geschweißten Schiene in einer diskontinuierlichen Wärmebehandlungseinheit zu erreichen, oder
b. für eine auf das Schweißen folgende Wärmebehandlung der gesamten kontinuierlichen geschweißten Schiene durch Führen der gesamten kontinuierlichen geschweißten Schiene durch die Wärmebehandlungseinheit (HU) zum Erwärmen aller aufeinanderfolgenden Querschnitte der kontinuierlichen geschweißten Schiene auf oberhalb der Ac₃-Temperatur, um eine vollständig austenitische Mikrostruktur in allen aufeinanderfolgenden Querschnitten zu erreichen;
iv. eine Halteeinheit zum Halten der kontinuierlichen geschweißten Schiene oder aller aufeinanderfolgenden Querschnitte auf oberhalb von Ac₃ über eine Zeit tₐ, wobei die Halteeinheit optional in die Wärmebehandlungseinheit integriert ist;
v. eine Kühleinheit (CU) zum Kühlen von Teilen der kontinuierlichen geschweißten Schiene oder der gesamten kontinuierlichen geschweißten Schiene oder aller aufeinanderfolgenden Querschnitte der KGS unter Verwendung eines Kühlmediums auf eine Kühlstopptemperatur Tₛₜₒₚₚ, um die gewünschte homogene transformierte endgültige Mikrostruktur und die gewünschten Eigenschaften in der gesamten nach dem Schweißen wärmebehandelten kontinuierlichen geschweißten Schiene zu erreichen,
vi. ein optionales Kopfprofilierungsmittel zum Versehen des Kopfes der kontinuierlichen geschweißten Schiene an den Positionen der einen oder der mehreren Schweißnähte mit dem gewünschten Schienenkopfprofil;
vii. ein optionales Richtmittel zum Richten der kontinuierlichen geschweißten Schiene und/oder ein optionales Richtmittel zum Richten der wärmebehandelten kontinuierlichen geschweißten Schiene.

8. Nach dem Schweißen wärmebehandelte Schiene, die gemäß dem Verfahren nach Anspruch 1 bis 6 hergestellt wurde oder unter Verwendung der Vorrichtung nach Anspruch 7 hergestellt wurde.

9. Schiene nach Anspruch 8, **dadurch gekennzeichnet, dass** an keiner Position entlang der gesamten Länge der nach dem Schweißen wärmebehandelten Schiene Wärmeeinflusszonen vorhanden sind.

10. Schiene nach Anspruch 8 oder 9, wobei:
- die Differenz zwischen der geringsten Härte in HV30 der nach dem Schweißen wärmebehandelten KGS und der Durchschnittshärte in HV30 der nach dem Schweißen wärmebehandelten KGS weniger als 10 % des Durchschnittshärtewertes in HV30 ist, oder wobei
- die Differenz zwischen der maximalen Härte in HV30 der nach dem Schweißen wärmebehandelten KGS und der Durchschnittshärte in HV30 der nach dem Schweißen wärmebehandelten KGS weniger als 15 % des Durchschnittshärtewertes in HV30 ist, oder wobei
- dass die Differenz zwischen der geringsten Härte der nach dem Schweißen wärmebehandelten KGS und der Durchschnittshärte in HV30 der nach dem Schweißen wärmebehandelten KGS weniger ist als 10 % des Durchschnittshärtewertes in HV30 und die Differenz zwischen dem maximalen Härte in HV30 der nach dem Schweißen wärmebehandelten KGS und der Durchschnittshärte in HV30 der nach dem Schweißen wärmebehandelten KGS weniger ist als 15 % des Durchschnittshärtewertes in HV30; und
wobei die Härten in HV30 gemäß ISO 6507-1:2005 bestimmt werden.

## Revendications

1. Procédé de production de rail soudé traité thermiquement pour le transport ferroviaire comprenant les étapes successives consistant à :
i. se procurer des longueurs de rail aux spécifications souhaitées ;
ii. souder deux longueurs de rail ensemble dans une unité de soudage pour produire un rail soudé continu, CWR, ou produire un rail soudé continu plus long en soudant une ou plusieurs longueurs de rail supplémentaires au rail soudé continu ;
iii. éventuellement, retirer un bourrelet ou des bourrelets de soudure, ou des parties de ceux-ci ;
**caractérisé par** les étapes suivantes :
iv. traiter thermiquement après soudage le rail soudé continu entier dans une unité de traitement thermique en chauffant le rail soudé continu entier, ou en chauffant toutes les sections transversales successives du rail soudé continu, jusqu'au-dessus de la température Ac₃ pour obtenir une microstructure totalement austénitique dans le rail soudé continu entier, puis en maintenant le rail soudé continu ou toutes les sections transversales successives de la section de rail soudé continu au-dessus d'Ac₃ pendant un temps prescrit tₐ puis en soumettant le rail soudé continu ou toutes les sections transversales successives du rail soudé continu à un refroidissement à une vitesse de refroidissement en utilisant un agent de refroidissement jusqu'à une température d'arrêt de refroidissement prescrite T_{arrêt} pour obtenir la microstructure transformée finale et les propriétés souhaitées sur la longueur entière du rail soudé continu traité thermiquement après soudage ;
v. éventuellement, pourvoir la tête du rail soudé continu traité thermiquement après soudage aux emplacements d'une soudure d'un profil de tête de rail souhaité.

2. Procédé selon la revendication 1 dans lequel le rail soudé continu est traité thermiquement à une vitesse d'avance constante d'au moins 0,5 et/ou au plus 10 m·min⁻¹.

3. Procédé selon l'une quelconque des revendications précédentes, dans lequel le bourrelet de soudure est retiré du pied, de préférence dans lequel le bourrelet de soudure est retiré du pied, de l'âme et de la tête du rail.

4. Procédé selon l'une quelconque des revendications précédentes, dans lequel le rail soudé continu est produit en soudant ensemble des longueurs d'acier ayant une composition appropriée pour obtenir une microstructure qui est essentiellement eutectoïde ou hypereutectoïde après traitement thermique, dans lequel la température d'arrêt de refroidissement est inférieure à Ar₁, et dans lequel la microstructure transformée finale traitée du rail soudé continu traité thermiquement après soudage consiste essentiellement en de la perlite ou de la perlite et de la cémentite et est sensiblement exempte ou complètement exempte de phases martensitique et/ou bainitique.

5. Procédé selon l'une quelconque des revendications précédentes, dans lequel le rail soudé continu est fabriqué en soudant ensemble des longueurs d'acier ayant une composition appropriée pour produire une microstructure bainitique après traitement thermique, dans lequel la température d'arrêt de refroidissement est telle que la microstructure transformée finale du rail soudé continu traité thermiquement après soudage est totalement bainitique et sensiblement ou entièrement exempte de martensite et sensiblement ou entièrement exempte de phases perlitique ou ferritique.

6. Procédé selon l'une quelconque des revendications précédentes, dans lequel le procédé de soudage est un procédé de soudage en bout par étincelage.

7. Dispositif destiné à effectuer le procédé de l'une quelconque des revendications 1 à 6 pourvu de :
i. une unité de soudage (WU) pour souder deux longueurs de rail ensemble dans l'unité de soudage (WU) pour produire un rail soudé continu, CWR, ou pour produire un rail soudé continu plus long en soudant des longueurs de rail supplémentaires au rail soudé continu ;
ii. une unité facultative pour retirer une partie ou la totalité d'un bourrelet de soudure ou de bourrelets de soudure ;
**caractérisé par** :
iii. une unité de traitement thermique (HU)
a. pour traiter thermiquement après soudage le rail soudé continu en soumettant le rail soudé continu entier à sensiblement le même traitement thermique au-dessus de la température Ac₃ pour obtenir une microstructure totalement austénitique dans le rail soudé continu dans une unité de traitement thermique par lots, ou
b. pour traiter thermiquement après soudage le rail soudé continu entier en faisant avancer le rail soudé continu entier à travers l'unité de traitement thermique (HU) pour chauffer toutes les sections transversales successives du rail soudé continu jusqu'au-dessus de la température Ac₃ pour obtenir une microstructure totalement austénitique dans toutes les sections transversales successives ;
iv. une unité de maintien pour maintenir le rail soudé continu ou toutes les sections transversales successives au-dessus d'Ac₃ pendant un temps tₐ, ladite unité de maintien étant éventuellement intégrée dans l'unité de traitement thermique ;
v. une unité de refroidissement (CU) pour refroidir des parties du rail soudé continu ou le rail soudé continu entier ou toutes les sections transversales successives du CWR en utilisant un agent de refroidissement jusqu'à une température d'arrêt de refroidissement T_{arrêt} pour obtenir la microstructure transformée finale homogène et les propriétés souhaitées dans le rail soudé continu traité thermiquement après soudage entier,
vi. un moyen de façonnage de profil de tête facultatif pour pourvoir la tête du rail soudé continu aux emplacements de la soudure ou des soudures du profil de tête de rail souhaité ;
vii. un moyen de dressage facultatif pour dresser le rail soudé continu et/ou un moyen de dressage facultatif pour dresser le rail soudé continu traité thermiquement.

8. Rail traité thermiquement après soudage produit selon le procédé de la revendication 1 à 6 ou produit en utilisant le dispositif de la revendication 7.

9. Rail selon la revendication 8 **caractérisé en ce qu'**aucune zone affectée par la chaleur n'est présente à aucune position sur la longueur entière du rail traité thermiquement après soudage.

10. Rail selon la revendication 8 ou 9 dans lequel :
- la différence entre la dureté minimale en HV30 du CWR traité thermiquement après soudage et la dureté moyenne en HV30 du CWR traité thermiquement après soudage est inférieure à 10 % de la valeur de dureté moyenne en HV30, ou dans lequel
- la différence entre la dureté maximale en HV30 du CWR traité thermiquement après soudage et la dureté moyenne en HV30 du CWR traité thermiquement après soudage est inférieure à 15 % de la valeur de dureté moyenne en HV30, ou dans lequel
- que la différence entre la dureté minimale du CWR traité thermiquement après soudage et la dureté moyenne en HV30 du CWR traité thermiquement après soudage est inférieure à 10 % de la valeur de dureté moyenne en HV30 et la différence entre la dureté maximale en HV30 du CWR traité thermiquement après soudage et la dureté moyenne en HV30 du CWR traité thermiquement après soudage est inférieure à 15 % de la valeur de dureté moyenne en HV30 ; et
dans lequel les duretés en HV30 sont déterminées conformément à la norme ISO 6507-1:2005.
